# EUROPEAN PATENT SPECIFICATION

(11) **EP 0 950 460 B1**
(45) Date of publication and mention of the grant of the patent: **16.06.2004**
(21) Application number: 99810306.3
(22) Date of filing: 13.04.1999
(51) Int. Cl.: B23K 11/00

(54) **Method for the production of a housing of a silencer, and such a housing**
Verfahren zum Herstellen eines Gehäuses eines Schalldämpfers und ein solches Gehäuse
Méthode de fabrication de l'enceinte d'un silencieux d'échappement, et enceinte fabriquée

(30) Priority: 17.04.1998 NL 1008920
(43) Date of publication of application: 20.10.1999
(73) Proprietor: SCAMBIA INDUSTRIAL DEVELOPMENTS AKTIENGESELLSCHAFT, 9494 Schaan (LI)
(72) Inventor: Stuer, Willem Denis Maria, 8390 Knokke-Heist (BE)
(74) Representative: Eder, Carl E.

(56) References cited:
- EP-A- 0 552 400
- FR-A- 2 214 818
- GB-A- 2 061 791
- US-A- 5 412 869

## Description

The invention relates to a method for the production of a housing of a silencer.

For this purpose it is customary to start from a metal plate, which is bent to form a casing such that the longitudinal edges come to lie on one another. The longitudinal edges are flanged to produce a lock seam (see for instance the US 5 398 407 A and the corresponding EP 0 807 749 A). Such a seam is sometimes provided with supplementary fixing by means of spot welding.

The flange resulting thereby necessarily protrudes somewhat with respect to the tubular body produced in this way. Moreover, the flanged seam is not completely sealed. This is because the flanging of the longitudinal edges does not provide a gas tight seam. The local spot weld joining is also not able to guarantee gas tightness.

The US 5 412 869 A discloses a method of making a cell or a pipe for a motor-vehicle latent-heat storage unit from a flat sheet metal piece which is very thin and at most a few tenths of a millimeter thick. The flat sheet metal piece is positioned over a slot of a die and pressed into the slot by means of an anvil bar. This imparts a U-shape to the sheet metal piece. The edge regions of the sheet metal piece are then folded over the anvil bar so that they overlap each other. The overlapping edge regions are afterwards ultrasonically welded together to form a tubular body. The anvil bar serves thereby as first welding tool. The second welding tool has a rotating head which is rolled along the overlapping edges. However, the produced tubular body doesn't form a part of a silencer housing and wouldn't hardly be suitable for a silencer housing which must be fairly solid.

It is an object of the invention to overcome disadvantages of the known methods and the housings produced thereby. More specifically, it is intended to provide a method for the production of a housing having a tubular body which has a gas tight and solid longitudinal seam without an outward projecting longitudinal flange. The method shall also be economical and permit to produce the tubular body from sheet metal as thin as desired and having any desired cross-sectional shape and cross-sectional dimension.

This object is achieved by means of the method according to claim 1.

The invention concerns also a housing for a silencer, as defined in claim 30, comprising a body produced in accordance with said method.

Advantageous refinements of the method and the housing are defined by the dependent claims.

If the piece of wall material is shaped according to the invention in such a way that the one surface of the piece of wall material faces towards the other surface at the location of the longitudinal edge portions, a substantially flat, continuous weld seam is obtained. Such a weld seam virtually does not protrude outwards with respect to the tubular body of the housing, and particularly with respect to the adjacent portions of the tubular body. Moreover, the production of the housing is simpler and more economical because the production of the connection of the longitudinal edge portions comprises only one welding operation. Complete gas tightness of the housing can also be guaranteed.

The sheet metal pieces for forming a wall material piece serving for the production of a tubular body may be cut from a larger, flat, weldable sheet metal part or from several sheet metal parts being on stock. Such large, flat sheet metal parts serving as basic material need only little space during transportation and storekeeping.

The wall material piece may be quadrilateral in the flat, undeformed state, wherein the two longitudinal edges can be parallel to one another and wherein the other two edges may be perpendicular to the longitudinal edges. The invention makes it possible to use a wall material piece having any desired length, width and particularly thickness and to produce nevertheless a gas tight, solid and durable seam. It is particularly possible to use a relatively thin wall material so that the tubular body has only a low weight. The wall material piece may for instance consist of sheet metal pieces or include sheet metal layers having a thickness which is at most 1.2 mm, preferably at most 1 mm or even at most 0.8 mm and for instance about 0.3 mm to 0.7 mm.

The method permits the production of a tubular body having any desired cross-sectional shape and cross-sectional dimension(s). The tubular body may be in cross-section, for instance, substantially circular or non-circular, and may in the latter case be, for instance, oval or have curved and flattened portions.

A sheet metal used for forming a layer of wall material may consist substantially of steel, for instance of general-purpose constructional steel having preferably a protective coating on one or both side(s). A sheet metal member may, for instance, consist of aluminised constructional steel. A sheet metal may also consist of uncoated stainless steel.

In order to increase the sound damping capacity of the housing, the latter is of double-wall construction. To this end a wall material is provided that comprises two layers of sheet metal material. The longitudinal edges of the two layers may then be coincident, The wall material is then shaped such that the opposing longitudinal edge portions of both layers of sheet material come to lie on one another. The four longitudinal edge portions are then welded to one another. The weld seam can, thus, be produced in the same way as for a single-walled housing.

The method according to the invention can also comprise the step of fitting a sound and heat insulating layer between two other layers which consist of sheet metal material.

The production of the continuous longitudinal seam can be carried out in various ways. In particular, consideration can be given to resistance welding by means of electrodes arranged on opposite sides of the longitudinal edge portions and of the weld seam to be formed. One electrode or both electrodes can be formed by a pressure roller and/or can be arranged between one of the edge portions and a pressure roller. The edge portions are then pressed progressively along the longitudinal edges toward each other by means of the roller or rollers.

The housing produced in this way offers supplementary advantages. By virtue of the complete, liquid tight and gas tight sealing of the weld seam, it is possible to generate a pressure difference over the wall. This is useful if the housing is further processed by means of mechanical deformation, such as liquid forming, of the wall material after producing the weld seam.

With the method according to the invention it is also possible to carry out the step of bending the opposing end edges of the body outwards or inwards. The weld seam is so robust that it does not give way even at the location of the end edges bent outwards or inwards, despite the high tensile stresses generated during this operation.

The body produced in accordance with this method also offers advantages when fixing the end walls, required to complete the housing, to the tubular body.

Preferably, end walls are used which have a peripheral flange, the periphery of which is matched to that of the body. In view of the fact that the weld seam in the body is substantially flat, the peripheral flange of each end wall can be joined either to the outside or to the inside of the body.

In this context the method according to the invention can comprise the steps of applying a soldering paste, particularly a hard-soldering paste, such as a copper paste, between the peripheral flange and the body and heating the copper paste in order to obtain a soldered, namely hard-soldered, joint between the end wall and the body. The embodiment in which the flanges of the end walls face towards one another is particularly advantageous. In this case it is possible to have at least one of the end walls approximately coincident with a plane determined by an end edge of the tubular body and/or of the complete housing so that the interior of the housing has a maximum volume, all of which is available for accommodating a sound-absorbent material.

Furthermore, a partition can be fitted in the housing in a relatively simple manner. In this context the method comprises fixing a partition in the body by means of the clamping action between the external periphery of the partition and the internal periphery of the tubular body.

The invention will be explained in more detail below with reference to illustrative embodiments shown in the Figures.
Fig. 1 shows a cross-section through a piece of wall material shaped to a tubular body for a silencer which is not according to the invention,
Fig. 2 shows a detail from Fig. 1 in larger size, parts of a welding equipment and copper wire electrodes,
Fig. 3 shows a similar parts as Fig. 2, but no copper wire electrodes,
Fig. 4 shows a view of a portion of a tubular body seen from the top of Fig. 1 and provided with a flanged end edge portion,
Fig. 5 shows a cross-section through an end wall,
Fig. 6 shows a section through a portion of a silencer comprising the parts shown in Figures 4 and 5,
Fig. 7 shows a longitudinal section through an other silencer,
Fig. 8 shows a portion of a modification of the silencer according to Fig. 7,
Fig. 9 shows similar parts as Fig. 2, but arranged for mash seam weld,
Fig. 10 shows the weld seam produced by the arrangement shown in Fig.9,
Fig. 11 shows a cross-section through a tubular body comprising two layers of sheet metal material,
Figures 12 to 14 show cross-sections through housings including an insulating layer, and
Fig. 15 shows a longitudinal section through a portion of the housing shown in Fig. 14.

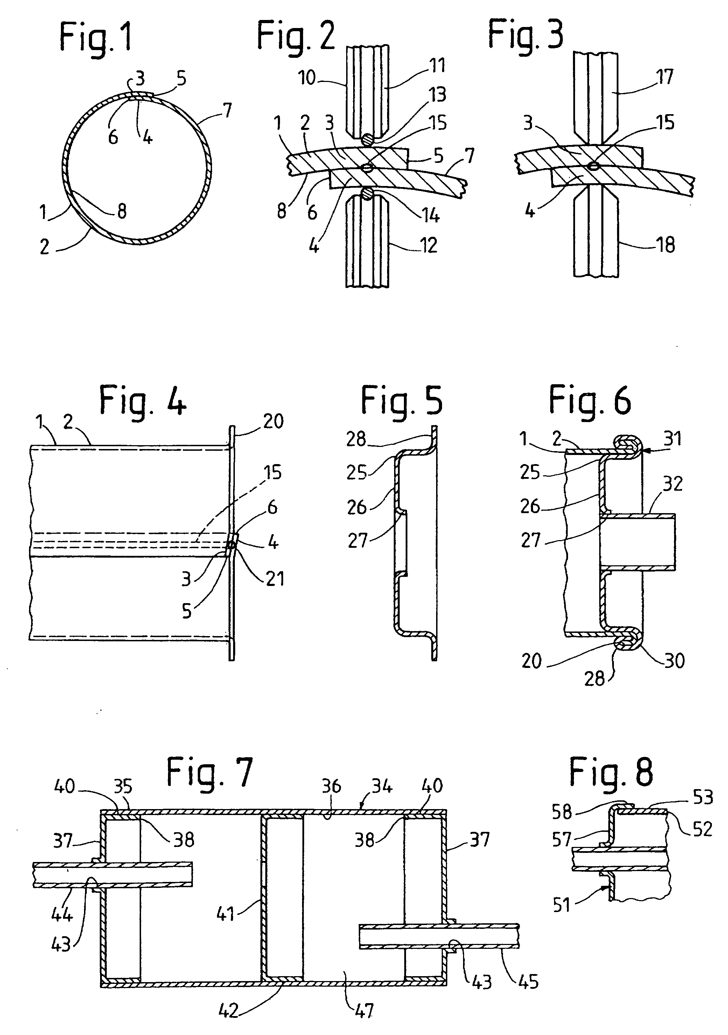

The figures 1-10 and 13-15 do not correspond to the invention as such but are shown for illustrative purposes.

The tubular body 1 shown in Figure 1 has been produced from a wall material piece 2, viz. an initially plain sheet metal piece or layer 2. The wall material piece or sheet metal piece 2 is quadrangular and has two opposing longitudinal edge portions 3, 4 limited by free longitudinal edges 5 and 6, respectively. These edge portions and edges are straight and parallel to one another. The initially plain sheet metal piece 2 has been bent and shaped in such a manner that it forms the tubular body 1 and that the latter is closed in cross-section all around, wherein the body 1 forms for instance substantially a cylinder being substantially circular in cross-section. The bent sheet metal piece has an external surface 7 and an internal surface 8. The edge portions 3, 4 overlap each other and lie against one another. The edge portion 3 is disposed outside of the edge portion 4 so that the portion of the internal surface 8 belonging to the outer edge portion 3 contacts the portion of the external surface 7 belonging to the inner edge portion 4. Each edge portion 3, 4 is for instance similarly curved as the main, middle portion of the sheet metal piece and connected substantially continuously, smoothly and without fold with said middle portion.

The welding equipment 10 partly shown in Fig. 2 comprises two pressure rollers 11, 12 arranged on opposite sides of the edge portions 3, 4. The rollers 11, 12 consist for instance of steel or any other hard metal alloy and are rotatable about axes, which are parallel to one another and perpendicular to the longitudinal direction of the tubular body 1. A copper wire electrode 13 is arranged between the edge portion 3 and the roller 11. Another copper wire electrode 14 is arranged between the edge portion 4 and the roller 12. The welding equipment 10 comprises an adjusting means for adjusting the distance of the two rollers so that the rollers press the electrodes 13, 14 and edge portions 3, 4 towards each other between small contact locations where the rollers contact the electrodes. The sheet metal piece 2 is displaced in the longitudinal direction thereof with respect to the roller axes for welding the edge portions. While the sheet metal piece is displaced relative to rollers, new portions of the electrodes 13, 14 are successively fed and get between the edge portions 3, 4 and the rollers. The longitudinal edge portions 3, 4 and the flexible copper wire electrodes 13, 14 are thereby pressed progressively along the longitudinal edges 5, 6 into the nip between the two pressure rollers. The electrodes extend then in general along the longitudinal edges 5 and 6. Moreover, an electric current is conducted through the electrodes and the edge portions during the displacement of the sheet metal piece. A schematically represented weld seam 15 is thereby formed by resistance welding. This weld seam 15 extends continuously along the entire length of the longitudinal edge portions 3, 4. The edge portions 3, 4 connected by the weld seam 15 and the latter are practically flat. It may be mentioned in this context that the thickness of the sheet metal piece 2 is in real size for instance at least 50 times or even at least 100 times smaller than the diameter or possible other maximum cross-sectional dimension of the tubular body 1 so that the steps of the external surface and internal surface of the completed tubular body caused by the edges 5, 6 are only small in relation to the diameter of the tubular body.

Fig. 3 illustrates a resistance welding method for welding the longitudinal edge portions 3, 4 to one another without copper wire electrodes. In this case, the pressure rollers 17, 18 engage directly the edge portion 3 and 4, respectively, serve also as electrodes and consist for instance at least in part of copper. The edge portions 3, 4 can be progressively pressed along the edges 5, 6 towards one another and be welded to one another analogously as in the welding operation illustrated in Fig. 2, wherein a weld seam 15 is produced.

The resistance welding method using intermediate copper wire electrodes as illustrated in Fig. 2 is suited particularly for welding a sheet metal piece 2 consisting of coated - particularly aluminised - constructional steel. The resistance welding method without intermediate electrodes as illustrated in Fig. 3 may be used for instance for welding the longitudinal edge portions of a sheet metal piece consisting of uncoated stainless steel. The weld seam 15 produced with the aid of intermediate copper wire electrodes or without such electrodes provides a tight and robust join.

By virtue of the of this robust join, it is possible, to mechanically deform the tubular body 1 and, for example, to bend one end portion or both opposite end portions of the body 1 in order to form a flange 20 projecting radially outwards, as shown in Figure 4. An end wall or the like can be fixed to each end of the tubular body 1. A suitable end wall 25 is shown in Fig. 5. This end wall 25 has a central portion 26 with a neck bounding a passage 27 and with a short annular, cylindrical portion fitting in the tubular body 1. The end wall 25 has also an annular edge portion or flange 28 projecting outwards. The flanges 20 and 28 are substantially straight in cross-sections, namely substantially plain and perpendicular to the axis of the tubular body 1 and the axis of the end wall 25 in the states of the tubular body and end wall represented in Figures 4 and 5. The central portion 26 of the end wall 25 is then inserted into an end portion of the tubular body 1 so that the flanges 20 and 28 come to lie one against the other. Afterwards the flanges 20, 28 are further flanged, i.e. bent and folded so that they form together a lock seam 30 shown in Fig. 6. The tubular body 1 and the two end walls together form a housing 31 of a silencer. A pipe 32 or the like can then be inserted into the passage 27 and fixed - e.g. welded - to the end wall 26.

The silencer shown in Fig. 7 comprises a housing 34 with a tubular body 35. The latter has an internal surface 36 and is again made from a sheet metal piece or layer having edge portions (not shown) connected by a weld seam similarly as the tubular body 1. However, the wall of the tubular body 35 is left straight and parallel to an axis - i.e. cylindrical - over the entire length of the body. End walls 37 are fixed in the tubular body 35. Both end walls 37 have an annular, cylindrical peripheral flange 38. The flanges project towards one another and into the tubular body 35. The flanges 38 have been fixed to the internal surface 36 of the body 1 by hard-soldering by means of a hard-soldering copper paste, which has produced the joints 40 by means of heating. The main, flat portions of the end walls are approximately flush with the ends of the tubular body, such that the volume of the cavity delimited by the housing 34, determined by the body 35 and the end walls 37 is maximum. Maximum sound damping can also be ensured as a result.

By virtue of the fact that an accurately produced body has been provided with the weld seam according to the invention, it is possible, for example, to fix a partition 41, in particular the external surface of the flange 42 thereof, by simply clamping against the internal surface 36 of the body 35 and/or by hard-soldering with the aid of a hard-soldering copper paste. The end walls 37, have passages 43 for connecting the pipe sections 44, 45 of the exhaust. The pipe sections may be fixed, for instance, by hard-soldering by means of a hard-soldering copper paste or by welding to the collars delimiting the passages 43 of the end walls 37.

The cavity delimited by the housing 34 can possibly be filled at least partially with a suitable sound-absorbent material such as fibre material. The interior chamber 47 between the partition 41 and one of the end walls 37 can for instance be filled with such a fibre material (not shown) before said end wall or both end walls is or are fixed.

The housing 51 partly shown in Fig. 8 comprises a tubular body 52 having an external surface 53. The housing 51 comprises also at least one end wall 57 with a flange 58 fixed to the tubular body 52. The housing 51 is in general similar to the housing 34 in Fig. 7, but differs from the housing 34 thereby that the flange 58 encompasses and engages the external surface 53 of the tubular body 52.

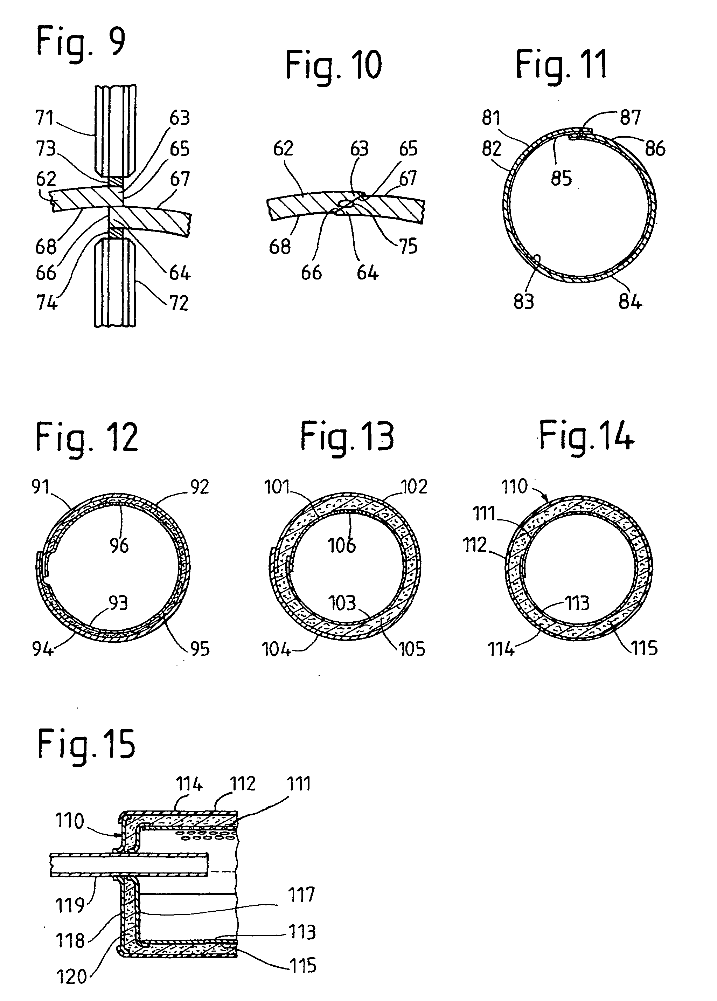

Fig. 9 shows parts of a sheet metal piece 62 having two longitudinal edge portions 63, 64 and longitudinal edges 65, 66. The initially plain sheet metal piece 62 has been shaped in such a way that the edge portions 63, 64 overlap one another only a little and distinctly less than the edge portions 3, 4 in Figures 2, 3. The edge portions 63, 64 are connected to one another by resistance welding with the aid of pressure rollers 71, 72 and copper wire electrodes 73, 74. For welding, the electrodes 73, 74 and edge portions 63, 64 are again pressed progressively along the edges 65, 66 by the rollers 71, 72 towards one another, wherein an electric current is conducted through the edge portions. The pressure rollers exert thereby a pressure onto the edge portions 63, 64 up to the edges 65, 66. The applied pressure is so high that the edge portions 63, 64 are strongly deformed. Fig. 10 illustrates schematically the result of this deformation process. Before the deformation, the edge portions 63, 64 lie with portions of the external surface 67 and the internal surface 68 on one another. After the deformation, the edge portions 63, 64 are more or less abutting and contacting one another at the edges 65, 66. The edge portions are then more or less lying on one another with portions of the surfaces 67, 68 and/or edge surfaces which are in general inclined in relation to the adjacent, undeformed portions of the surfaces 67, 68. After welding, the edge portions are connected by a weld seam 75. The resistance welding method illustrated in the Figures 9 and 10 is designated as mash seam weld.

As shown in Fig. 11, the invention provides a tubular body 81 which comprises a wall material piece 82 having a first, inner layer 83 and a second, outer layer 84, each of these layers consisting of sheet metal material. The outer layer 84 lies with the internal surface on the external surface of the inner layer 83. The two layers 83, 84 have longitudinal edge portions and longitudinal edges. For manufacturing the tubular body 81, the initially plain first sheet metal layer 83 is shaped, after which the second sheet metal layer 84 is wrapped around the first layer 83 so that the two layers 83, 84 lie on one another and that the longitudinal edges of the two layers are substantially coincident in pairs. Moreover, a pair of longitudinal edge portions of the two layers overlaps the opposing pair of longitudinal edge portions of the two layers so that the internal surface 85 of the inner layer 83 lies on the external surface 86 of the outer layer 84 at the overlapping edge portions. All four edge portions are then connected by one and the same weld seam 87 which is produced in a single welding operation by resistance welding.

The tubular body 91 shown in Fig. 12 comprises a wall material piece 92. The latter has an inner sheet metal layer 93, an outer sheet metal layer 94 and an insulating layer 95 arranged between the main, middle portions of the two metal sheet layers 93, 94. The two metal sheet layers 93, 94 have been shaped so that their four longitudinal edge portions lie on one another and have been connected to one another by one and the same weld seam produced in a single welding operation. The middle, main portion of the inner sheet metal layer 93 may possibly comprise at least one perforation 96 which extends for instance over a part of the middle main portion or even more or less over the entire middle, main portion.

The housing shown in Fig. 13 has a wall including an inner tubular body 101 and an outer tubular body 102. The two bodies 101, 102 are made from a shaped inner sheet metal layer 103 and outer sheet metal layer 104, respectively. An insulating layer 105 is arranged between the two sheet metal layers. Each sheet metal layer 103, 104 has overlapping edge portions, wherein the edge portions of the inner layer are spaced from the edge portions of the outer layer. The edge portions of the inner layer are connected to one another by a weld seam and the edge portions of the outer layer are connected to one another by another weld seam. The insulating layer 105 separates the two sheet metal layers 103, 104 in cross-section along the complete circumferences of the two sheet metal layers. The inner sheet metal layer may again have at least one perforation 106.

The silencer housing 110 shown in Figures 14 and 15 comprises a multilayer wall. The innermost part of this wall consists of a tubular body 111 shaped from a sheet metal layer 113 having overlapping longitudinal edge portions connected by a weld seam. The wall comprises also an outer layer 114 consisting of plastics and an insulating layer 115 arranged between the layers 113, 114. A first, inner end wall 117 is fixed to each end of the tubular body 111 or sheet metal layer 113. A second, outer end wall 118 is arranged in a small distance from the inner end wall. The two end walls consist of a metal material, e.g. steel, and are solidly connected by a pipe 119. An insulating layer 120 is disposed between the two end walls and continuous with the insulating layer 115. The outer layer 114 is made from a shrinkable plastic tubing which has been shrinked by heating and which has thereby been fixed to flanges of the outer end walls 118.

In the invention, as the housing comprises two metal sheet layers according to the Figures 11, 12, the two layers may possibly have different thicknesses, wherein the inner layer is for instance thinner than the outer layer. Moreover, the two layers may possibly consist of different materials. The inner layer may for instance consist of uncoated stainless steel, and the outer layer may then consist of aluminised constructional steel. However, the two metal sheet layers may have the same thickness and consist of the same material.

The insulating layers 95, 105, 115 and 120 consist of mineral fibres, for example of basalt wool and/or an other rock wool and/or possibly glass wool. Such layers damp the sound and reduce also the heat transmission. This reduction of the heat transmission makes it possible to make the outermost layer 114 of the tubular body shown in Figures 14, 15 from plastics as already stated.

The methods for the production of a housing and the produced housings can furthermore be modified in various ways. For example, one of the two rollers used for resistance welding could be replaced by a rigid, rod-shaped, stationary support supporting the tubular body along the complete length thereof. Instead of displacing the sheet metal layers serving to form the tubular body, the remaining roller could then be displaced along the weld seam to be formed. In the tubular body shown in Fig. 4, the flange 20 projecting outwards could be replaced by a flange projecting inwards. The end walls of the various housings could be fixed to the tubular bodies by welding.

## Claims

1. Method for the production of a housing of a silencer, comprising the following steps:
providing two sheet metal pieces for forming two sheet metal layers (83, 84, 93, 94) of a wall material piece (82, 92), each sheet metal layer (83, 84, 93, 94) having two opposing longitudinal edge portions forming two longitudinal edges,
shaping the two sheet metal layers (83, 84, 93, 94) so that the opposing longitudinal edge portions of both sheet metal layers (83, 84, 93, 94) overlap one another and come to lie on one another
and welding the four longitudinal edge portions to one another so that a tubular body (81, 91) having a continuous weld seam (87), which extends substantially along an entire length of the longitudinal edge portions, is formed.

2. Method according to claim 1, wherein the two sheet metal layers (83, 84, 93, 94) are initially plain and quadrilateral, wherein the two opposing longitudinal edges are parallel to one another and wherein each sheet metal layer (83, 84, 93, 94) has two other edges which are perpendicular to the longitudinal edges.

3. Method according to claim 1 or 2, wherein the shaping of the sheet metal layers (83, 84, 93, 94) is made so that an external surface (86) of the wall material piece (82, 92) faces toward an internal surface (85) of the wall material piece (82, 92) at the location of the longitudinal edge portions.

4. Method according to claim 1 or 2, wherein the two sheet metal layers (83, 84, 93, 94) include a first sheet metal layer (83, 93) and a second sheet metal layer (84, 94) and wherein the first sheet metal layer (83, 93) is shaped first, after which the second sheet metal layer (84, 94) is wrapped around the first sheet metal layer (83, 93) in order to form the wall material piece (82, 92) having opposing longitudinal edge portions lying on one another.

5. Method according to any of the preceding claims, wherein the shaping of the two sheet metal layers (83, 84, 93, 94) is made so that the longitudinal edges of the two sheet metal layers (83, 84, 93, 94) are substantially coincidental in pairs.

6. Method according to any of the preceding claims, wherein the sheet metal layers (83, 84, 93, 94) consist substantially of steel.

7. Method according to any of the preceding claims, wherein at least one of the sheet metal layers (83, 84, 93, 94) consists substantially of uncoated stainless steel.

8. Method according to any of the preceding claims, wherein at least one of the sheet metal layers (83, 84, 93, 94) consists substantially of steel and has a coating at least on one side.

9. Method according to any of the preceding claims, wherein the sheet metal layers (83, 84, 93, 94) include an inner sheet metal layer (83, 93) and an outer sheet metal layer (84, 94), wherein the inner sheet metal layer (83, 93) consists of uncoated stainless steel and wherein the outer sheet metal layer (84, 94) consists of aluminised steel.

10. Method according to any of the preceding claims, comprising the step of arranging an insulating layer (95) between main, middle portions of the sheet metal layers (93, 94).

11. Method according to claim 10, wherein the insulating layer (95) is made from mineral fibres, for example, from basalt wool and/or rock wool and/or glass wool.

12. Method according to claim 1, wherein the sheet metal layers (93, 94) include an inner sheet metal layer (93) and an outer sheet metal layer (94) and wherein the inner sheet metal layer (93) comprises at least one perforated portion.

13. Method according to any of the preceding claims, wherein each sheet metal layer (83, 84, 93, 94) has a thickness of at most 1.2 mm, preferably of at most 1 mm and for example of at most 0.8 mm.

14. Method according to any of the preceding claims, wherein each sheet metal layer (83, 84, 93, 94) has a thickness which is 0.3 mm up to 0.7 mm.

15. Method according to any of the preceding claims, wherein welding of the longitudinal edge portions includes resistance welding.

16. Method according to claim 15, comprising resistance welding by means of electrodes arranged on opposite sides of longitudinal edge portions.

17. Method according to any of the preceding claims, wherein the edge portions are pressed progressively along the longitudinal edges toward each other by means of at least one roller when they are welded to one another.

18. Method according to claim 16 and 17, wherein at least one of the electrodes is formed by a roller and/or is arranged between one of the edge portions and a roller.

19. Method according to any of the preceding claims, wherein the edge portions are arranged between rollers and are pressed progressively along the longitudinal edges toward each other by means of the rollers when they are welded to one another.

20. Method according to claim 15 or 16 and claim 19, comprising resistance welding by means of two electrodes arranged on opposite sides of the longitudinal edge portions, wherein each electrode is arranged between one of the edge portions and one of the rollers or is formed by one of the rollers .

21. Method according to claim 20, wherein each electrode consists of a copper wire arranged between one of the edge portions and one of the rollers .

22. Method according to any of the preceding claims, wherein the welding of the four longitudinal edge portions is achieved in a single welding operation.

23. Method according to any of the preceding claims, comprising mechanical deformation of the wall material piece (82, 92) after production of the weld seam.

24. Method according to any of the preceding claims, comprising bending the opposing end edge portions of the tubular body (91) outwards or inwards after production of the weld seam.

25. Method according to any of the preceding claims, comprising fixing end walls to opposing ends of the tubular body.

26. Method according to claim 25, comprising the production of at least one of the end walls having a peripheral flange and fixing the peripheral flange to the internal or external surface of the tubular body.

27. Method according to claim 26, wherein the at least one end wall is fixed by hard-soldering to the tubular body.

28. Method according to any of the preceding claims, comprising fixing a partition in the tubular body by means of a clamping action between an external periphery of the partition and an internal surface of the tubular body and/or by soldering, particularly hard-soldering.

29. Method according to any of the preceding claims, comprising at least partially filling the tubular body with a sound-absorbent material, for example fibre material.

30. Housing for a silencer, comprising a tubular body (81, 91) as obtainable when produced in accordance with the method according to any of the preceding claims, **characterised in that** the tubular body (81, 91) comprises a wall material piece (82, 92) having two sheet metal pieces forming two sheet metal layers (83, 84, 93, 94) of the wall material piece (82, 92), that each sheet metal layer (83, 84, 93, 94) has two opposing longitudinal edge portions forming two longitudinal edges, that the two sheet metal layers (83, 84, 93, 94) have such shapes that the opposing longitudinal edge portions of both sheet metal layers (83, 84, 93, 94) overlap one another and lie on one another and that the four longitudinal edge portions are welded to one another so that the tubular body (81, 91) has a continuous weld seam (87), which extends substantially along an entire length of the longitudinal edge portions.

31. Housing according to claim 30, **characterised in that** the inner sheet metal layer (93) of the wall material piece (92) comprises at least one perforated portion.

32. Housing according to claim 30 or 31 comprising a body as obtainable when produced in accordance with claim 25 or 26, **characterised in that** two end walls are present and that at least one of these end walls is approximately coincident with a plane determined by an end edge of the tubular body and/or of the complete housing and has a peripheral flange fixed to the internal or external surface of the tubular body.

## Patentansprüche

1. Verfahren zur Herstellung eines Gehäuses eines Schalldämpfers, wobei das Verfahren die folgenden Schritte aufweist:
bereitstellen von zwei Blechstücken zur Bildung von zwei Blechschichten (83, 84, 93, 94) eines Wandmaterialstücks (82, 92), wobei jede Blechschicht (83, 84, 93, 94) zwei gegenüberstehende Längsrandabschnitte hat, die zwei Längsränder bilden,
formen der zwei Blechschichten (83, 84, 93, 94), so dass die gegenüberstehenden Längsrandrandabschnitte von beiden Blechschichten (83, 84, 93, 94) einander überlappen und zur Auflage aufeinander gelangen,
und verschweissen der vier Längsrandabschnitte miteinander, so dass ein rohrförmiger Körper (81, 91) mit einer zusammenhängenden Schweissnaht (87) gebildet wird, die sich im Wesentlichen entlang einer ganzen Länge der Längsrandabschnitte erstreckt.

2. Verfahren nach Anspruch 1, wobei die zwei Blechstücke (83, 84, 93, 94) ursprünglich eben und viereckförmig sind, wobei die zwei gegenüberstehenden Längsränder parallel zueinander sind und wobei jede Blechschicht (93, 84, 93, 94) noch zwei andere Ränder hat, die senkrecht zu den Längsrändern sind.

3. Verfahren nach Anspruch 1 oder 2, wobei das Formen der Blechschichten (83, 84, 93, 94) derart gemacht wird, dass eine Aussenfläche (86) des Wandmaterialstücks (82, 92) bei den Längsrandabschnitten einer Innenfläche (85) des Wandmaterialstücks (82, 92) zugewandt ist.

4. Verfahren nach Anspruch 1 oder 2, wobei die zwei Blechschichten (83, 84, 93, 94) eine erste Blechschicht (83, 93) und eine zweite Blechschicht (84, 94) umfassen und wobei die erste Blechschicht (83, 93) zuerst geformt wird, wonach die zweite Blechschicht (84, 94) um die erste Blechschicht (83, 93) gewickelt wird, um das Wandmaterialstück (82, 92) zu bilden, das gegenüberstehende, aufeinander aufliegende Längsrandabschnitte hat.

5. Verfahren nach einem der vorangehenden Ansprüche, wobei die Formung der zwei Blechschichten (83, 84, 93, 94) derart gemacht wird, dass die Längsränder der zwei Blechschichten (83, 84, 93, 94) einander im Wesentlichen paarweise decken.

6. Verfahren nach einem der vorangehenden Ansprüche, wobei die Blechschichten (83, 84, 93, 94) im Wesentlichen aus Stahl bestehen.

7. Verfahren nach einem der vorangehenden Ansprüche, wobei mindestens eine der Blechschichten (83, 84, 93, 94) im Wesentlichen aus unbeschichtetem, rostfreiem Stahl besteht.

8. Verfahren nach einem der vorangehenden Ansprüche, wobei mindestens eine der Blechschichten (83, 84, 93, 94) im Wesentlichen aus Stahl besteht und auf mindestens einer Seite einen Überzug hat.

9. Verfahren nach einem der vorangehenden Ansprüche, wobei die Blechschichten (83, 84, 93, 94) eine innere Blechschicht (83, 93) und eine äussere Blechschicht (84, 94) umfassen, wobei die innere Blechschicht (83, 93) aus unbeschichtetem, rostfreiem Stahl besteht und wobei die äussere Blechschicht (84, 94) aus aluminiumsiertem Stahl besteht.

10. Verfahren nach einem der vorangehenden Ansprüche, wobei das Verfahren den Schritt aufweist, eine Isolationsschicht (95) zwischen Haupt-Mittel-Abschnitten der Blechschichten (93, 94) anzuordnen.

11. Verfahren nach Anspruch 10, wobei die Isolationsschicht (95) aus Mineralfasern, zum Beispiel aus Basaltwolle und/oder Steinwolle und/oder Glaswolle, gebildet wird.

12. Verfahren nach Anspruch 1, wobei die Blechschichten (93, 94) eine innere Blechschicht (93) und eine äussere Blechschicht (94) umfassen und wobei die innere Blechschicht (93) mindestens einen perforierten Abschnitt aufweist.

13. Verfahren nach einem der vorangehenden Ansprüche, wobei jede Blechschicht (83, 84, 93, 94) eine Dicke von höchstens 1,2 mm, vorzugsweise höchstens 1 mm und zum Beispiel höchstens 0,8 mm hat.

14. Verfahren nach einem der vorangehenden Ansprüche, wobei jede Blechschicht (83, 84, 93, 94) eine Dicke hat, die 0,3 mm bis zu 0,7 mm beträgt.

15. Verfahren nach einem der vorangehenden Ansprüche, wobei das Schweissen der Längsrandabschnitte ein Widerstandsschweissen umfasst.

16. Verfahren nach Anspruch 15, wobei das Widerstandsschweissen mit Hilfe von auf gegenüberstehenden Seiten von Längsrandabschnitten angeordneten Elektroden erfolgt.

17. Verfahren nach einem der vorangehenden Ansprüche, wobei die Randabschnitte fortschreitend entlang den Längsrändern mittels mindestens einer Rolle gegeneinander gepresst werden, wenn sie miteinander verschweisst werden.

18. Verfahren nach Anspruch 16 und 17, wobei mindestens eine der Elektroden durch eine Rolle gebildet und/oder zwischen einem der Randabschnitte und einer Rolle angeordnet ist.

19. Verfahren nach einem der vorangehenden Ansprüche, wobei die Randabschnitte zwischen Rollen angeordnet und mittels der Rollen fortschreitend entlang den Längsrändern gegeneinander gepresst werden, wenn sie miteinander verschweisst werden.

20. Verfahren nach Anspruch 15 oder 16 und Anspruch 19, wobei das Widerstandsschweissen mittels zweier auf gegenüberstehenden Seiten der Längsrandabschnitte angeordneter Elektroden erfolgt, wobei jede Elektrode zwischen einem der Randabschnitte und einer der Rollen angeordnet oder durch eine der Rollen gebildet wird.

21. Verfahren nach Anspruch 20, wobei jede Elektrode aus einem zwischen einem der Randabschnitte und einer der Rollen angeordneten Kupferdraht besteht.

22. Verfahren nach einem der vorangehenden Ansprüche, wobei das Verschweissen der vier Längsabschnitte in einem einzigen Schweissvorgang durchgeführt wird.

23. Verfahren nach einem der vorangehenden Ansprüche, bei welchem das Wandmaterialstück (82, 92) noch der Herstellung der Schweissnaht mechanisch verformt wird.

24. Verfahren nach einem der vorangehenden Ansprüche, bei welchem die gegenüberstehenden Randabschnitte nach der Herstellung der Schweissnaht nach aussen oder innen gebogen werden.

25. Verfahren nach einem der vorangehenden Ansprüche, bei welchem Endwände an gegenüberstehenden Enden des rohrförmigen Körpers befestigt werden.

26. Verfahren nach Anspruch 25, bei welchem mindestens eine der Endwände mit einem Umfangsflansch gebildet wird und der Umfangsflansch an der Innen- oder Aussenfläche des rohrförmigen Körpers befestigt wird.

27. Verfahren nach Anspruch 26, wobei die mindestens eine Endwand durch Hartlöten am rohrförmigen Körper befestigt wird.

28. Verfahren nach einem der vorangehenden Ansprüche, bei welchem eine Trennwand durch eine Klemmwirkung zwischen einer Aussen-Umfangsfläche der Trennwand und einer Innenfläche des rohrförmigen Körpers und/oder durch Löten, insbesondere Hartlöten, im rohrförmigen Körper befestigt wird.

29. Verfahren nach einem der vorangehenden Ansprüche, bei welchem der rohrförmige Körper mindestens teilweise mit einem schallabsorbierenden Material, beispielsweise Fasermaterial, gefüllt wird.

30. Gehäuse für einen Schalldämpfer, mit einem rohrförmigen Körper, wie er bei der Herstellung gemäss dem Verfahren nach einem der vorangehenden Ansprüche erhältlich ist, **dadurch gekennzeichnet, dass** der rohrförmige Körper (81, 91) ein Wandmaterialstück (82, 92) mit zwei Blechstücken aufweist, die zwei Blechschichten (83, 84, 93, 94) des Wandmaterialstücks (82, 82) bilden, dass jede Blechschicht (83, 84, 93, 94) zwei gegenüberstehende Längsabschnitte hat, die zwei Längsränder bilden, dass die zwei Blechschichten (83, 84, 93, 94) derartige Formen haben, dass die gegenüberstehende Längsrandabschnitte der beiden Blechschichten (83, 84, 93, 94) einander überlappen und aneinander anliegen und dass die vier Längsrandabschnitte miteinander verschweisst werden, so dass der rohrförmige Körper (81, 91) eine zusammenhängende Schweissnaht hat, welche sich im Wesentlichen entlang einer ganzen Länge der Längsrandabschnitte erstreckt.

31. Gehäuse nach Anspruch 30, **dadurch gekennzeichnet, dass** die innere Blechschicht (93) des Wandmaterialstücks (92) mindestens einen perforierten Abschnitt aufweist.

32. Gehäuse nach Anspruch 30 oder 31 mit einem Körper, wie er bei der Herstellung gemäss dem Verfahren nach Anspruch 25 oder 26 erhältlich ist, **dadurch gekennzeichnet, dass** zwei Endwände vorhanden sind und dass mindestens eine dieser Endwände ungefähr mit einer durch einen Endrand des rohrförmigen Körpers und/oder des ganzen Gehäuses bestimmten Ebene zusammenfällt und einen an der Innen- oder Aussenfläche des rohrförmigen Körpers befestigten Umfangsflansch hat.

## Revendications

1. Procédé de production d'un carter de silencieux. comprenant les étapes suivantes
fournir deux morceaux de tôle en vue de former deux couches de tôle (83, 84, 93, 94) d'une partie de matériau de paroi (82, 92), chaque couche de tôle (83, 84, 93, 94) comportant deux parties de bords longitudinaux opposés formant deux bords longitudinaux,
façonner les deux couches de tôle (83, 84, 93, 94) de sorte que les parties de bords longitudinaux opposés des deux couches de tôle (83, 84, 93, 94) se chevauchent l'une l'autre et viennent à reposer l'une sur l'autre
et souder les quatre parties de bords longitudinaux les unes aux autres de sorte qu'un corps tubulaire (81, 91) comportant un raccord de soudage continu (87), qui s'étend pratiquement sur toute la longueur des parties de bords longitudinaux, est formé.

2. Procédé selon la revendication 1, dans lequel les deux couches de tôle (83, 84, 93, 94) sont initialement planes et quadrilatères, où les deux bords longitudinaux opposés sont parallèles l'un à l'autre et où chaque couche de tôle (83, 84, 93, 94) comporte deux autres bords qui sont perpendiculaires aux bords longitudinaux.

3. Procédé selon la revendication 1 ou 2, dans lequel le façonnage des couches de tôle (83, 84, 93, 94) est réalisé de sorte qu'une surface externe (86) de la partie du matériau de paroi (82, 92) est orientée vers une surface interne (85) de la partie de matériau de paroi (82, 92) à l'endroit des parties de bords longitudinaux.

4. Procédé selon la revendication 1 ou 2, dans lequel les deux couches de tôle (83, 84, 93, 94) comprennent une première couche de tôle (83, 93) et une seconde couche de tôle (84, 94) et dans lequel la première couche de tôle (83, 93) est façonnée la première, après quoi la seconde couche de tôle (84, 94) est enroulée autour de la première couche de tôle (83, 93) de manière à former la partie de matériau de paroi (82, 92) comportant des parties de bords longitudinaux opposés reposant l'une sur l'autre.

5. Procédé selon l'une quelconque des revendications précédentes, dans lequel le façonnage des deux couches de tôle (83, 84, 93, 94) est réalisé de sorte que les bords longitudinaux des deux couches de tôle (83, 84, 93, 94) sont pratiquement coïncidents par paire.

6. Procédé selon l'une quelconque des revendications précédentes, dans lequel les couches de tôle (83, 84, 93, 94) sont essentiellement constituées d'acier.

7. Procédé selon l'une quelconque des revendications précédentes, dans lequel au moins l'une des couches de tôle (83, 84, 93, 94) est constituée essentiellement d'acier inoxydable non enduit.

8. Procédé selon l'une quelconque des revendications précédentes, dans lequel au moins une des couches de tôle (83, 84, 93, 94) est constituée essentiellement d'acier et présente un revêtement au moins d'un côté.

9. Procédé selon l'une quelconque des revendications précédentes, dans lequel les couches de tôle (83, 84, 93, 94) comprennent une couche de tôle interne (83, 93) et une couche de tôle externe (84, 94), dans lequel la couche de tôle interne (83, 93) est constituée d'acier inoxydable non enduit et dans lequel la couche de tôle externe (84, 94) est constituée d'acier aluminé.

10. Procédé selon l'une quelconque des revendications précédentes, comprenant l'étape consistant à disposer une couche isolante (95) entre des parties principales centrales des couches de tôle (93, 94).

11. Procédé selon la revendication 10, dans lequel la couche isolante (95) est fabriquée à partir de fibres de minéraux, par exemple, à partir de laine de basalte et/ou de laine de roche et/ou de laine de verre.

12. Procédé selon la revendication 1, dans lequel les couches de tôle (93, 94) comprennent une couche de tôle interne (93) et une couche de tôle externe (94) et dans lequel la couche de tôle interne (93) comprend au moins une partie perforée.

13. Procédé selon l'une quelconque des revendications précédentes, dans lequel chaque couche de tôle (83, 84, 93, 94) présente une épaisseur d'au moins 1,2 mm, de préférence d'au plus 1 mm et par exemple d'au plus 0,8 mm.

14. Procédé selon l'une quelconque des revendications précédentes, dans lequel chaque couche de tôle (83, 84, 93, 94) présente une épaisseur qui se situe entre 0,3 mm et 0,7 mm.

15. Procédé selon l'une quelconque des revendications précédentes, dans lequel le soudage des parties de bords longitudinaux comprend un soudage électrique par résistance.

16. Procédé selon la revendication 15, comprenant un soudage électrique par résistance au moyen d'électrodes agencées sur les côtés opposés des parties de bords longitudinaux.

17. Procédé selon l'une quelconque des revendications précédentes, dans lequel les parties de bords sont pressées progressivement le long des bords longitudinaux l'une vers l'autre au moyen d'au moins un rouleau lorsqu'elles sont soudées l'une à l'autre.

18. Procédé selon la revendication 16 et la revendication 17, dans lequel au moins l'une des électrodes est formée par un rouleau et/ou est agencée entre une des parties de bords et un rouleau.

19. Procédé selon l'une quelconque des revendications précédentes. dans lequel les parties de bords sont agencées entre des rouleaux et sont pressées progressivement le long des bords longitudinaux l'une vers l'autre au moyen des rouleaux lorsqu'elles sont soudées l'une à l'autre.

20. Procédé selon la revendication 15 ou 16 et la revendication 19, comprenant un soudage électrique par résistance au moyen de deux électrodes agencées sur les côtés opposés des parties de bords longitudinaux, dans lequel chaque électrode est agencée entre une des parties de bords et un des rouleaux ou est formée par l'un des rouleaux.

21. Procédé selon la revendication 20, dans lequel chaque électrode est constituée d'un fil de cuivre agencé entre une des parties de bords et un des rouleaux.

22. Procédé selon l'une quelconque des revendications précédentes. dans lequel le soudage des quatre parties de bords longitudinaux est accompli en une seule opération de soudage.

23. Procédé selon l'une quelconque des revendications précédentes, comprenant une déformation mécanique de la partie du matériau de paroi (82, 92) après la production du cordon de soudage.

24. Procédé selon l'une quelconque des revendications précédentes. comprenant la flexion des parties de bords d'extrémités opposés du corps tubulaire (91) vers l'extérieur ou vers l'intérieur après la production du cordon de soudage.

25. Procédé selon l'une quelconque des revendications précédentes, comprenant la fixation des parois d'extrémités aux extrémités opposées du corps tubulaire.

26. Procédé selon la revendication 25, comprenant la production d'au moins une des parois d'extrémités comportant un rebord périphérique et fixant le rebord périphérique à la surface interne ou externe du corps tubulaire.

27. Procédé selon la revendication 26, dans lequel la au moins une paroi d'extrémité est fixée par un brasage fort au corps tubulaire.

28. Procédé selon l'une quelconque des revendications précédentes, comprenant la fixation d'une séparation dans le corps tubulaire au moyen d'une action de serrage entre une périphérie externe de la séparation et une surface interne du corps tubulaire et/ou par brasage, en particulier un brasage fort.

29. Procédé selon l'une quelconque des revendications précédentes. comprenant au moins partiellement le remplissage du corps tubulaire avec un matériau d'absorption acoustique, par exemple un matériau de fibres.

30. Carter pour un silencieux, comprenant un corps tubulaire (81, 91) pouvant être obtenu lorsqu'il est produit conformément au procédé selon l'une quelconque des revendications précédentes, **caractérisé en ce que** le corps tubulaire (81, 91) comprend une partie de matériau de paroi (82, 92) comportant deux parties de tôle formant deux couches de tôle (83, 84, 93, 94) de la partie de matériau de paroi (82, 92), **en ce que** chaque couche de tôle (83, 84, 93, 94) comporte deux parties de bords longitudinaux opposés formant deux bords longitudinaux, **en ce que** les deux couches de tôle (83, 84, 93, 94) comportent de telles formes que les parties de bords longitudinaux opposés des deux couches de tôle (83, 84, 93, 94) se chevauchent les unes les autres et reposent les unes sur les autres et **en ce que** les quatre parties de bords longitudinaux sont soudées les unes aux autres de sorte que le corps tubulaire (81, 91) présente un raccord de soudage continu (87). qui s'étend pratiquement sur toute la longueur des parties de bords longitudinaux.

31. Carter selon la revendication 30, **caractérisé en ce que** la couche de tôle interne (93) de la partie de matériau de paroi (92) comprend au moins une partie perforée.

32. Carter selon la revendication 30 ou 31, comprenant un corps pouvant être obtenu lorsqu'il est produit conformément à la revendication 25 ou 26, **caractérisé en ce que** deux parois d'extrémités sont présentes et **en ce qu'**au moins une de ces parois d'extrémités est approximativement coïncidente à un plan déterminé par un bord d'extrémité du corps tubulaire et/ou du carter complet et présente un rebord périphérique fixé à la surface interne ou externe du corps tubulaire.
